# EUROPEAN PATENT APPLICATION

(11) **EP 4 501 154 A1**
(43) Date of publication of application: **05.02.2025**
(21) Application number: 23923228.3
(22) Date of filing: 31.10.2023
(51) Int. Cl.: A24F 40/46

(54) **LASER CIGARETTE LIGHTING DEVICE AND PREPARATION METHOD THEREFOR**

(30) Priority: 18.08.2023 CN 202311052241; 13.06.2023 US 202363472782 P
(71) Applicant: Vertilite Co., Ltd., Changzhou, Jiangsu 213000 (CN)
(72) Inventor: ZHAO, Li, Changzhou, Jiangsu 213000 (CN); FENG, Feifei, Changzhou, Jiangsu 213000 (CN); HUANG, Xinfeng, Changzhou, Jiangsu 213000 (CN); LUO, Zhitong, Changzhou, Jiangsu 213000 (CN)
(74) Representative: HGF
(86) International application number: PCT/CN2023/128607
(87) International publication number: WO 2024/255079

(57) **Abstract**

Provided are a laser ignition device and a preparation method thereof. The laser ignition device includes a housing (10), a light-transmissive container (20) and a laser-emitting unit. The light-transmissive container (20) is located in the housing (10). The laser-emitting unit includes multiple lasers (30), where the multiple lasers (30) are disposed between the housing (10) and the light-transmissive container (20), and light emission directions of the multiple lasers (30) are towards the light-transmissive container (20). A to-be-atomized raw material and a heat-absorbing material are disposed in the light-transmissive container (20), and the multiple lasers (30) are configured to heat and atomize the to-be-atomized raw material; the heat-absorbing material is used for absorbing heat to increase the atomization degree of the to-be-atomized raw material.

## Description

This application claims priority to the United States Provisional Patent Application No. 63/472,782 filed with the United States Patent and Trademark Office (USPTO) on Jun. 13, 2023 and Chinese Patent Application No. 202311052241.6 filed with the China National Intellectual Property Administration (CNIPA) on Aug. 18, 2023, the disclosures of which are incorporated herein by reference in their entireties.

### TECHNICAL FIELD

Embodiments of the present application relate to the field of laser technology, for example, a laser ignition device and a preparation method thereof.

### BACKGROUND

An electronic cigarette is an electronic product imitating a cigarette, with the same appearance, smoke, taste and feel as the cigarette. The electronic cigarette is a product that converts nicotine and other substances into vapor through atomization and other means for users to inhale.

Heating manners of the electronic cigarette mainly include electrode heating and electronic induction coil heating. According to the electrode heating manner, the ceramic surface is usually plated with electrodes, and the ceramic is processed into a "dagger" shape to be inserted into to-be-atomized raw materials such as tobacco leaves or tobacco oil. However, the electrode heating manner raises the temperature of the to-be-atomized raw materials such as tobacco leaves or tobacco oil to reach 200°C to 300°C, leading to the release of various substances harmful to the human body from the to-be-atomized raw materials such as tobacco leaves or tobacco oil. In the electronic induction coil heating manner, the heating temperature can prevent the to-be-atomized raw materials such as tobacco leaves or tobacco oil from releasing multiple substances harmful to the human body. However, whether the ceramic or heavy metal materials such as metal electrodes plated on the ceramic surface and electronic induction coils will release harmful substances during long-term use or dry burning. The harmful substances not only pose risks to smokers when inhaled with the atomized raw materials, but also are not environmentally unfriendly.

### SUMMARY

Embodiments of the present application provide a laser ignition device and a preparation method thereof to reduce the amount of harmful substances released during the heating process of the device and improve the environmental friendliness of the device.

The present application provides a laser ignition device. The laser ignition device includes a housing, a light-transmissive container and a laser-emitting unit.

The light-transmissive container is located in the housing.

The laser-emitting unit includes multiple lasers, where the multiple lasers are disposed between the housing and the light-transmissive container, and light emission directions of the multiple lasers are towards the light-transmissive container.

A to-be-atomized raw material and a heat-absorbing material are disposed in the light-transmissive container, and the multiple lasers are configured to heat and atomize the to-be-atomized raw material; the heat-absorbing material is used for absorbing heat to increase the atomization degree of the to-be-atomized raw material.

Optionally, an absorption peak of the heat-absorbing material within a wavelength range of 650 nm to 1550 nm exceeds a preset value; the heat-absorbing material includes at least one of graphite, ceramic, silicon carbide, metal, oxide and nitride.

Optionally, at least part of the heat-absorbing material is in powder form, and the powder-form heat-absorbing material is uniformly mixed in the to-be-atomized raw material.

The powder-form heat-absorbing material includes at least one of silicon carbide powder, graphite powder, ceramic powder, metal powder, oxide powder and nitride powder.

Optionally, at least part of the heat-absorbing material forms a porous and loose structure.

Alternatively, at least part of the heat-absorbing material forms a heat-absorbing body; the heat-absorbing body includes at least one hollowed-out cavity configured to accommodate the to-be-atomized raw material.

The heat-absorbing body is in a cylindrical structure, a spherical structure or a cubic structure.

A shape of the at least one hollowed-out cavity includes at least one of a circular shape, an annular shape, an elliptical shape, a polygonal shape and an irregular shape.

Optionally, at least part of the heat-absorbing material forms a heat-absorbing thin film, and the heat-absorbing thin film covers part of an inner surface of the light-transmissive container.

Optionally, the laser ignition device further includes an anti-reflective film, where the anti-reflective film covers at least one of an outer surface of the light-transmissive container and an inner surface of the light-transmissive container.

Optionally, the laser ignition device further includes a thermally conductive electrical insulation substrate, where the thermally conductive electrical insulation substrate is fixed to an inner surface of the housing through solder; the multiple lasers are disposed on a surface of a side of the thermally conductive electrical insulation substrate on away from the housing and are electrically connected to an electrode layer located on a surface of the thermally conductive electrical insulation substrate.

The electrode layer includes a positive electrode and a negative electrode; the positive electrode and the negative electrode are configured to be led out from the housing through a flexible printed circuit board and electrically connected to a drive unit; or the positive electrode and the negative electrode are configured to be led out from the housing through electrode rods and electrically connected to a drive unit.

Optionally, a material of the housing includes heat-dissipating metal.

A material of the tthermally conductive electrical insulation substrate includes at least one of ceramic, aluminum nitride, copper diamond, beryllium oxide and aluminum oxide

A material of the light-transmissive container includes at least one of glass, silicon carbide, ceramic, oxide and nitride.

Types of the multiple lasers in the laser-emitting unit include at least one of an edge emitting laser, a vertical cavity surface emitting laser, a photonic crystal laser and a horizontal cavity surface emitting laser.

Optionally, a photodetector is disposed opposite each laser, and an optical structure is disposed between the each laser and the photodetector; the optical structure is configured to guide part of light of the each laser to the photodetector.

Optionally, the optical structure includes a light pipe, and the light pipe is disposed in the housing of the light-transmissive container.

The present application provides a preparation method of a laser ignition device for preparing the laser ignition device described in any embodiment of the present application. The method includes steps described below.

A metal heat sink is provided.

Multiple lasers are fixed to a surface of the metal heat sink.

A light-transmissive container is provided and the metal heat sink is processed into a housing surrounding the light-transmissive container, where the multiple lasers are disposed between the housing and the light-transmissive container, and light emission directions of the multiple lasers are towards the light-transmissive container; the light-transmissive container is configured to accommodate a to-be-atomized raw material and a heat-absorbing material, and the multiple lasers are configured to heat and atomize the to-be-atomized raw material; the heat-absorbing material is used for absorbing heat to increase the atomization degree of the to-be-atomized raw material.

It is to be understood that the content described in this part is neither intended to identify key or important features of embodiments of the present application nor intended to limit the scope of the present application. Other features of the present application are apparent from the description provided hereinafter.

### BRIEF DESCRIPTION OF DRAWINGS

Drawings used in the description of the embodiments will be briefly described below.
FIG. 1 is a structural view of a laser ignition device according to an embodiment of the present application;
FIG. 2 is a disassembled view of the structure shown in FIG. 1;
FIG. 3 is a view of the bottom of the structure shown in FIG. 2;
FIG. 4 is a structural view of a light-transmissive container according to an embodiment of the present application;
FIG. 5 is a structural view of another light-transmissive container according to an embodiment of the present application;
FIG. 6 is a structural view of a porous and loose structure according to an embodiment of the present application;
FIG. 7 is a structural view of a heat-absorbing body according to an embodiment of the present application;
FIG. 8 is a structural view of a heat-absorbing thin film on an inner surface of a light-transmissive container according to an embodiment of the present application;
FIG. 9 is a structural view of another laser ignition device according to an embodiment of the present application;
FIG. 10 is a disassembled view of the structure shown in FIG. 9;
FIG. 11 is a flowchart of a preparation method of a laser ignition device according to an embodiment of the present application; and
FIG. 12 is a flowchart of another preparation method of a laser ignition device according to an embodiment of the present application.

### DETAILED DESCRIPTION

Hereinafter technical solutions in embodiments of the present application are described in conjunction with the drawings in the embodiments of the present application.

The terms "first", "second" and the like in the description, claims and preceding drawings of the present application are used for distinguishing between similar objects and are not necessarily used for describing a particular order or sequence. It should be understood that data used in this manner is interchangeable in appropriate cases so that the embodiments of the present application described herein can be implemented in an order not illustrated or described herein. Additionally, terms "including" and "having" and any other variations thereof are intended to encompass a non-exclusive inclusion. For example, in addition to a process, method, system, product or apparatus of a series of steps or units that are listed in the embodiments of the present application, other processes, methods, systems products or apparatuses of the series of steps or units that are not expressly listed or other steps or units which are inherent to such the process, method, product or apparatus may also be included.

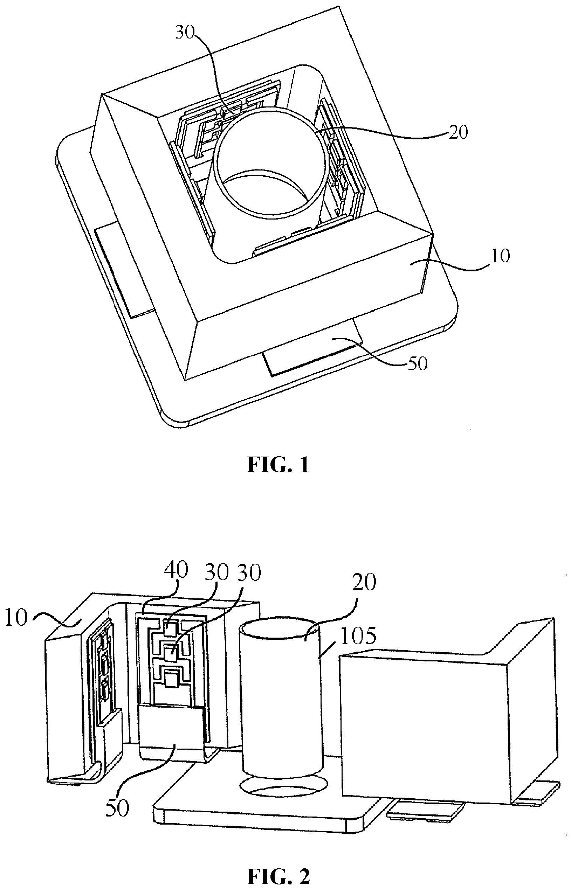

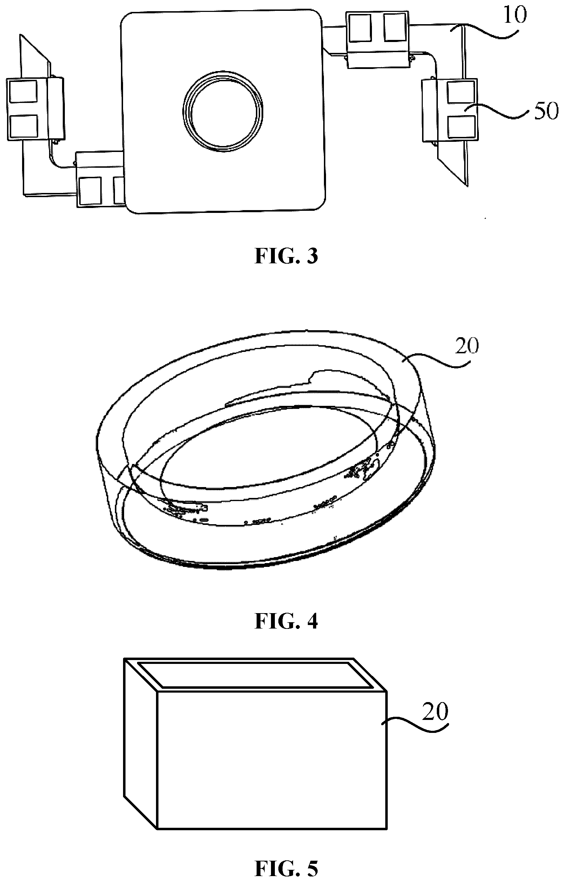

An embodiment of the present application provides a laser ignition device. FIG. 1 is a structural view of a laser ignition device according to an embodiment of the present application, FIG. 2 is a disassembled view of the structure shown in FIG. 1, and FIG. 3 is a view of the bottom of the structure shown in FIG. 2. Referring to FIG. 1 to FIG. 3, the laser ignition device includes a housing 10, a light-transmissive container 20 and a laser-emitting unit. The light-transmissive container 20 is located in the housing 10. The laser-emitting unit includes multiple lasers 30. The multiple lasers 30 are disposed between the housing 10 and the light-transmissive container 20, and light emission directions of the multiple lasers 30 are towards the light-transmissive container 20. A to-be-atomized raw material and a heat-absorbing material are disposed in the light-transmissive container 20, and the multiple lasers 30 are configured to heat and atomize the to-be-atomized raw material; the heat-absorbing material is used for absorbing heat to increase the atomization degree of the to-be-atomized raw material.

The laser ignition device includes the housing 10, the light-transmissive container 20 and the laser-emitting unit. The light-transmissive container 20 is configured to accommodate the to-be-atomized raw material. The to-be-atomized raw material may include solid tobacco or liquid tobacco, as well as other raw materials that can be heated and inhaled for entertainment or medical purposes, which is not limited in the embodiment of the present application. The light-transmissive container 20 is disposed in the housing 10. Multiple lasers 30 are fixed to an inner surface of the housing 10 so that several lasers 30 with light emission directions towards the light-transmissive container 20 are disposed around the light-transmissive container 20 or at the bottom of the light-transmissive container 20. The advantage of light coherence of lasers enables the heat of the lasers to be transferred to the to-be-atomized raw material so that the to-be-atomized raw material is heated and atomized. The material of the light-transmissive container 20 includes one or more of glass, silicon carbide, ceramic, oxide and nitride so that the requirement of laser transmittance can be satisfied.

The housing 10 may be in a cylindrical shape, a spherical shape or a cubic shape. The light-transmissive container 20 may be in a cylindrical shape or a rectangular shape or similar to a pan. FIG. 1 exemplarily shows that the light-transmissive container 20 is in a cylindrical shape, FIG. 4 exemplarily shows that the light-transmissive container 20 is like a pan, and FIG. 5 exemplarily shows that the light-transmissive container 20 is in a rectangular shape. In a cross section of the housing 10, along the edge of the shape formed by housing 10, lasers 30 may be arranged along a single side, along two sides or along multiple sides. Optionally, these lasers 30 may be uniformly arranged on the periphery of the light-transmissive container 20 so that the energy of the lasers 30 can be more uniformly transmitted to the to-be-atomized raw material.

The heat-absorbing material that do not decompose above 200°C and can absorb laser heat well is further disposed in the light-transmissive container 20, such as graphite, silicon carbide, ceramic, metal, oxide and nitride, which have relatively high absorption peaks between 650 nm to 1550 nm. These heat-absorbing materials are used for absorbing heat from lasers and transferring the heat to the to-be-atomized raw material such as the tobacco oil or the cut tobacco, making atomization of the to-be-atomized raw material easier.

According to the laser ignition device provided in the embodiment of the present application, the advantage of light coherence of lasers enables the heat of the lasers to be transferred to the to-be-atomized raw material so that the to-be-atomized raw material is heated and atomized. The temperature of laser heating can prevent the release of multiple substances harmful to the human body from the to-be-atomized raw material, and can also reduce or avoid the release of harmful substances from materials such as ceramic and metal electrodes in the device. Moreover, as the heating source, the lasers are disposed outside the light-transmissive container, which can prevent direct contact between the lasers and the to-be-atomized raw material. In this manner, the problem can be solved that the to-be-atomized raw material covers electrodes or electronic coil, leading to increased heat loss. Therefore, harmful substances released by ceramic, metal electrodes and other materials inhaled into the body with the atomized raw material can be reduced or avoided, so that the harm caused to smokers themselves can be reduced, and the environmental friendliness of electronic cigarettes is improved. In addition, the heat-absorbing material is disposed in the light-transmissive container. The heat-absorbing material can increase the atomization degree of the to-be-atomized raw material and improve the user experience.

In an embodiment of the present application, optionally, at least part of the heat-absorbing material is in powder form, and the powder-form heat-absorbing material is uniformly mixed in the to-be-atomized raw material.

The heat absorbing material that is not easy to decompose and can absorb the heat of lasers well is further disposed in the light-transmissive container 20. An absorption peak of the added heat-absorbing material within a wavelength range of 650 nm to 1550 nm exceeds a preset value. For example, the heat-absorbing material may be silicon carbide powder, graphite powder, ceramic powder, metal powder, oxide powder or nitride powder, which have relatively high absorption peaks between 650 nm to 1550 nm. The powder-form heat-absorbing material may be uniformly mixed in the to-be-atomized raw material, so that heat can be more uniformly transferred to the to-be-atomized raw material, and the to-be-atomized raw material can be fully heated and atomized.

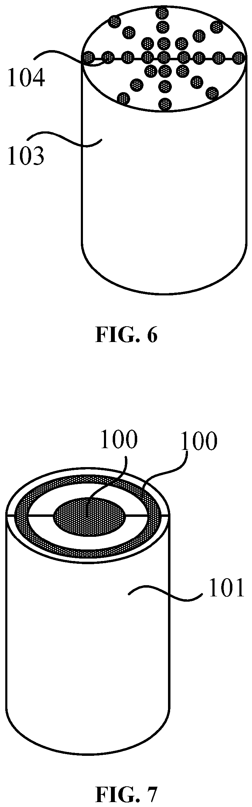

In an embodiment of the present application, FIG. 6 is a structural view of a porous and loose structure according to an embodiment of the present application. Referring to FIG. 6, at least part of the heat-absorbing material forms a porous and loose structure 103, and the to-be-atomized raw material is filled into the holes 104 of the porous and loose structure 103.

FIG. 7 is a structural view of a heat-absorbing body according to an embodiment of the present application. Referring to FIG. 7, optionally, at least part of the heat-absorbing material forms a heat-absorbing body 101. The heat-absorbing body 101 includes at least one hollowed-out cavity 100 configured to accommodate the to-be-atomized raw material. The heat-absorbing body 101 is in a cylindrical structure, a spherical structure or a cubic structure. The shape of the hollowed-out cavity 100 includes at least one of a circular shape, an annular shape, an elliptical shape, a polygonal shape and an irregular shape.

The heat-absorbing material added to the light-transmissive container 20 may also be made into a cylindrical structure, a spherical structure or a cubic structure, and the three-dimensional structure is hollowed out to form a variety of shapes of hollowed-out cavities 100, which is convenient for filling and accommodating the to-be-atomized raw material. The heat-absorbing material can absorb more heat to transfer to the to-be-atomized raw material. Exemplarily, in FIG. 7, the heat-absorbing body 101 forms an annular groove and a circular groove, each groove is a hollowed-out cavity 100, and the to-be-atomized raw material is filled in the grooves of the heat-absorbing body 101. The heat-absorbing body 101 may also form multiple circular grooves. The light-transmissive container 20 may accommodate both the heat-absorbing material in the three-dimensional structure and the heat-absorbing material in the powder form, so as further improve the atomization degree of the to-be-atomized raw material.

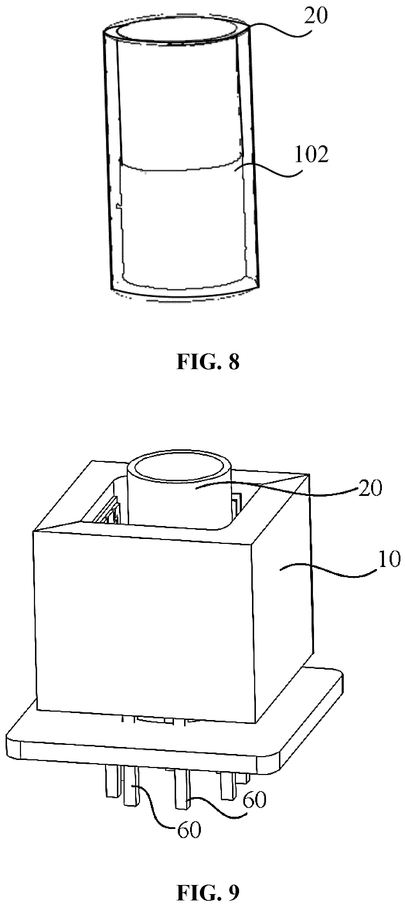

In an embodiment of the present application, FIG. 8 is a structural view of a heat-absorbing thin film on an inner surface of a light-transmissive container according to an embodiment of the present application. Referring to FIG. 8, at least part of the heat-absorbing material forms a heat-absorbing thin film 102, and the heat-absorbing thin film 102 covers part of the inner surface of the light-transmissive container 20. That is, the light-transmissive container 20 may also be coated with the preceding material that can effectively absorb the heat of lasers inside so that the atomization of the to-be-atomized raw material is promoted. Due to the need to observe the state of the tobacco oil, the light-transmissive container 20 only needs to be coated half.

The laser ignition device may accommodate the heat-absorbing material in the powder form, the porous and loose structure formed by the heat-absorbing material 103, the heat-absorbing body 101 and the heat-absorbing thin film 102, or may accommodate one or any of these materials.

In an embodiment of the present application, the laser ignition device further includes an anti-reflective film 105. As shown in FIG. 2 the anti-reflective film 105 covers at least one of an outer surface of the light-transmissive container 20 and an inner surface of the light-transmissive container 20. It is to be understood that the surface of the light-transmissive container 20 may be plated with a corresponding film according to the wavelength of the lasers 30 so that higher transmittance is achieved to further improve the atomization degree of the to-be-atomized raw material.

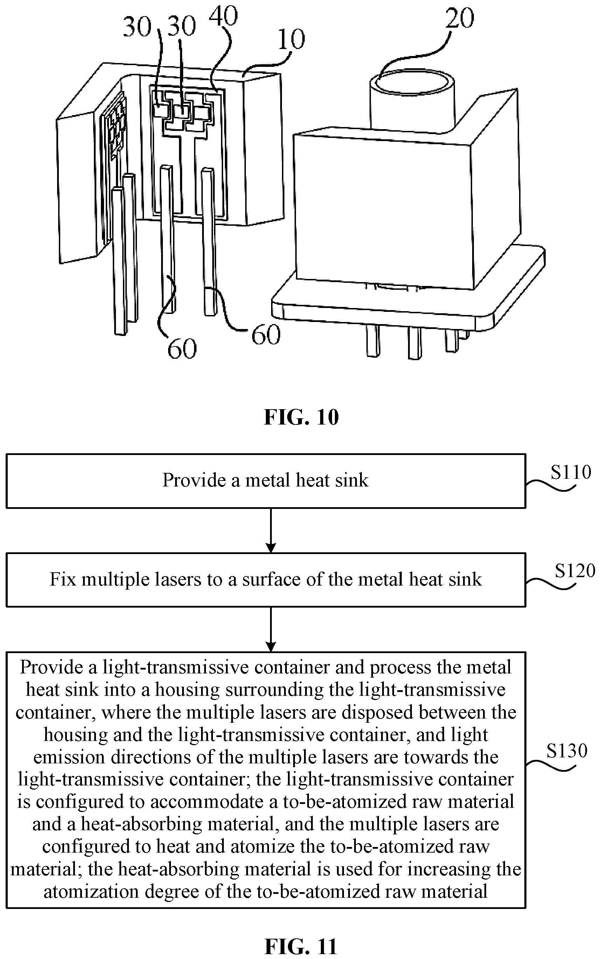

In an embodiment of the present application, FIG. 9 is a structural view of another laser ignition device according to an embodiment of the present application, and FIG. 10 is a disassembled view of the structure shown in FIG. 9. Referring to FIG. 9 and FIG. 10 and FIG. 1 to FIG. 3, the laser ignition device further includes a thermally conductive electrical insulation substrate 40, where the thermally conductive electrical insulation substrate 40 is fixed to an inner surface of the housing 10 through solder. The multiple lasers 30 are disposed on a surface of a side of the thermally conductive electrical insulation substrate 40 on away from the housing 10 and are electrically connected to an electrode layer located on a surface of the thermally conductive electrical insulation substrate 40. The electrode layer includes a positive electrode and a negative electrode; the positive electrode and the negative electrode are led out from the housing 10 through a flexible printed circuit board 50 and electrically connected to a drive unit; or the positive electrode and the negative electrode are led out from the housing 10 through electrode rods 60 and electrically connected to a drive unit.

The bottom of the laser 30 is supported by the thermally conductive electrical insulation substrate 40, and a metal layer with a certain pattern exists on the surface of thermally conductive electrical insulation substrate 40 and is electrically connected to the laser 30. The multiple lasers 30 may be mounted on the surface of the metal layer through solder such as silver paste, indium, gold tin, tin silver copper and tin bismuth. The metal layer includes a positive electrode and a negative electrode, which are electrically connected to the positive electrode and the negative electrode of the laser 30 respectively. The thermally conductive electrical insulation substrate 40 may be a highly thermally conductive and electrical insulating substrate made of materials such as aluminum nitride, copper diamond, beryllium oxide or aluminum oxide to facilitate the heat dissipation of the laser 30 and to reduce the release of harmful substances from the metal layer on the surface of the thermally conductive electrical insulation substrate 40. In addition, a material of the housing 10 may be heat-dissipating metal. The heat-dissipating metal of the housing 10 may be highly thermally conductive metals such as copper and/or aluminum to further effectively dissipate heat from the laser 30.

Metal electrode rods 60 may be used for leading out the positive electrode and the negative electrode of the laser 30 (as shown in FIG. 9 and FIG. 10), or a flexible printed circuit board (FPCB) 50 tape may be used for leading out the positive electrode and the negative electrode of the laser 30 (as shown in FIG. 1 to FIG. 3). The metal electrode rods 60 or the flexible printed circuit board 50 is inserted into a printed circuit board (PCB) through the surface mount technology (SMT) or other manners to achieve the electrical connection between the laser 30 and the drive circuit. A circuit with certain functions is disposed on the PCB so that the driving of the laser 30 can be achieved. The driving condition may be that the laser 30 is in a continuous mode or a quasi-continuous-wave (QCW) mode, such as a mode of opening for 1 sec, closing for 10 sec, the pulse width from 10 ns to 1 sec, the duty cycle from 1% to 100%, and the peak power from 1 W to 500 W. If relatively more lasers 30 are disposed, different holes or pads may be provided and disposed on the PCB for uniformly welding the metal electrode rods 60 or the FPCB 50 used for leading out the electrodes of the laser 30 to the surface of the PCB to achieve the uniform distribution of lasers 30.

Types of the lasers 30 in the laser-emitting unit include one or more of an edge emitting laser, a vertical cavity surface emitting laser, a photonic crystal laser or a horizontal cavity surface emitting laser. A wavelength range of the laser 30 is 650 nm to 1550 nm, the number of junctions may range from 1 to 10 for achieving higher peak power, and the number of lasers 30 may range from 1 to 1000, which may be set according to actual requirements and are not limited in the embodiment of the present application.

In an embodiment of the present application, a photodetector is disposed opposite a laser 30. The photodetector is configured to detect the working state of lasers to prevent that the failure of the laser 30 from being undetected. An optical structure is disposed between the laser 30 and the photodetector; the optical structure is configured to guide part of light of the laser to the photodetector to facilitate the detection by the photodetector of the working state of the laser 30.

The optical structure may be a light pipe or other specific optical path designs. The light pipe or other specific light path designs may be disposed inside the housing of the light-transmissive container 20 to prevent the impact on the space occupied by and heat absorption of the to-be-atomized raw material when the light pipe or other specific light path designs are disposed together with the to-be-atomized raw material in the hollowed-out cavity 100 of the light-transmissive container 20.

An embodiment of the present application further provides a preparation method of a laser ignition device for preparing the laser ignition device described in any of the preceding embodiments. FIG. 11 is a flowchart of a preparation method of a laser ignition device according to an embodiment of the present application. Referring to FIG. 11, the preparation method of a laser ignition device includes steps described below.

In S110, a metal heat sink is provided.

In S 120, multiple lasers are fixed to a surface of the metal heat sink.

In S130, a light-transmissive container is provided and the metal heat sink is processed into a housing surrounding the light-transmissive container, where the multiple lasers are disposed between the housing and the light-transmissive container, and light emission directions of the multiple lasers are towards the light-transmissive container; the light-transmissive container is configured to accommodate a to-be-atomized raw material and a heat-absorbing material, and the multiple lasers are configured to heat and atomize the to-be-atomized raw material; the heat-absorbing material is used for increasing the atomization degree of the to-be-atomized raw material.

The metal heat sink is a planar structure that may have corner shapes, so that the housing surrounding the light-transmissive container processed with the metal heat sink may be in a cylindrical shape, a spherical shape or a cubic shape. The light-transmissive container may be in a cylindrical shape or a rectangular shape or similar to a pan. The light-transmissive container accommodates the to-be-atomized raw material. The to-be-atomized raw material may include solid tobacco or liquid tobacco oil, as well as other raw materials that can be heated and inhaled for entertainment or medical purposes, which is not limited in the embodiment of the present application. Multiple lasers are fixed to an inner surface of the housing, so that several lasers with light emission directions towards the light-transmissive container are disposed around the light-transmissive container or at the bottom of the light-transmissive container. The advantage of light coherence of lasers enables the heat of the lasers to be transferred to the to-be-atomized raw material so that the to-be-atomized raw material is heated and atomized. The material of the light-transmissive container includes one or more of glass, silicon carbide, ceramic, oxide and nitride so that the requirement of laser transmittance can be satisfied. In a cross section of the housing, along the edge of the shape formed by housing, lasers may be arranged along a single side, along two sides or along multiple sides. Optionally, several lasers are disposed around the light-transmissive container or at the bottom of the light-transmissive container. These lasers may be uniformly arranged on the periphery of the light-transmissive container, enabling the energy of the lasers to be more uniformly transferred to the to-be-atomized raw material. The heat-absorbing material that do not decompose above 200°C and can absorb laser heat well is further disposed in the light-transmissive container, such as graphite, ceramic, metal, oxide and nitride, which have relatively high absorption peaks between 650 nm to 1550 nm. These heat-absorbing materials are used for absorbing heat from lasers and transferring the heat to the tobacco oil or the cut tobacco, making atomization of the to-be-atomized raw material easier.

According to the preparation method of a laser ignition device provided in the embodiment of the present application, lasers are disposed around the light-transmissive container accommodating the to-be-atomized raw material, and the advantage of light coherence of lasers enables the heat of the lasers to be transferred to the to-be-atomized raw material so that the to-be-atomized raw material is heated and atomized. The temperature of laser heating can prevent the release of multiple substances harmful to the human body from the to-be-atomized raw material. Moreover, as the heating source, the lasers are disposed outside the light-transmissive container, which can prevent direct contact between the lasers and the to-be-atomized raw material. In this manner, the problem can be solved that the to-be-atomized raw material covers electrodes or electronic coil, leading to increased heat loss. In addition, as the heating source, the lasers are disposed outside the light-transmissive container, which can reduce or avoid harmful substances released by ceramic, metal electrodes and other materials, so that the harm caused to smokers themselves can be reduced, and the environmental friendliness of electronic cigarettes is improved. In addition, the heat-absorbing material is disposed in the light-transmissive container. The heat-absorbing material can increase the atomization degree of the to-be-atomized raw material and improve the user experience.

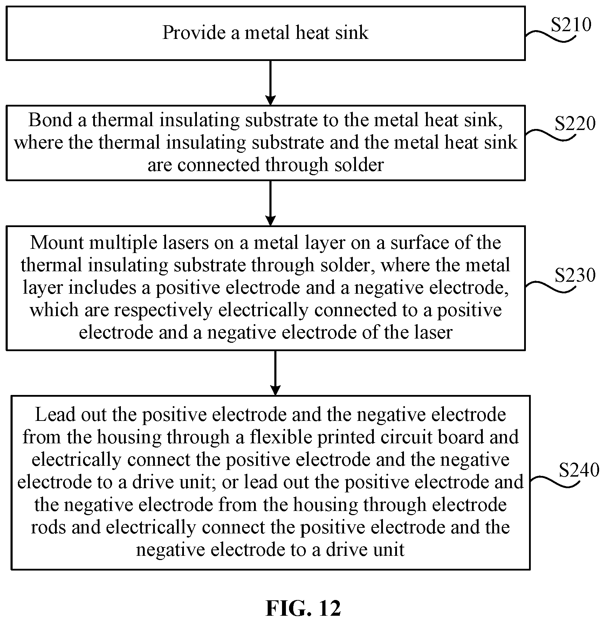

FIG. 12 is a flowchart of another preparation method of a laser ignition device according to an embodiment of the present application. Referring to FIG. 12, the preparation method of a laser ignition device includes steps described below.

In S210, a metal heat sink is provided.

In S220, a thermally conductive electrical insulation substrate is bonded to the metal heat sink, where the thermally conductive electrical insulation substrate and the metal heat sink are connected through solder. The solder may include silver paste, indium, tin silver copper, tin bismuth and gold tin.

In S230, multiple lasers are mounted on a metal layer on a surface of the thermally conductive electrical insulation substrate through solder, where the metal layer includes a positive electrode and a negative electrode, which are respectively electrically connected to a positive electrode and a negative electrode of the laser.

In S240, the positive electrode and the negative electrode are led out from the housing through a flexible printed circuit board and electrically connected to a drive unit; or the positive electrode and the negative electrode are led out from the housing through electrode rods and electrically connected to a drive unit.

## Claims

1. A laser ignition device, comprising:
a housing;
a light-transmissive container located in the housing; and
a laser-emitting unit, comprising a plurality of lasers, wherein the plurality of lasers are disposed between the housing and the light-transmissive container, and light emission directions of the plurality of lasers are towards the light-transmissive container;
wherein a to-be-atomized raw material and a heat-absorbing material are disposed in the light-transmissive container, and the plurality of lasers are configured to heat and atomize the to-be-atomized raw material; the heat-absorbing material is used for absorbing heat to increase an atomization degree of the to-be-atomized raw material.

2. The laser ignition device according to claim 1, wherein an absorption peak of the heat-absorbing material within a wavelength range of 650 nm to 1550 nm exceeds a preset value; the heat-absorbing material comprises at least one of graphite, silicon carbide, ceramic, metal, oxide and nitride.

3. The laser ignition device according to claim 2, wherein at least part of the heat-absorbing material is in powder form, and the powder-form heat-absorbing material is uniformly mixed in the to-be-atomized raw material; and
the powder-form heat-absorbing material comprises at least one of silicon carbide powder, graphite powder, ceramic powder, metal powder, oxide powder and nitride powder.

4. The laser ignition device according to claim 2 or 3, wherein at least part of the heat-absorbing material forms a porous and loose structure; or
at least part of the heat-absorbing material forms a heat-absorbing body; the heat-absorbing body comprises at least one hollowed-out cavity configured to accommodate the to-be-atomized raw material; the heat-absorbing body is in a cylindrical structure, a spherical structure or a cubic structure; a shape of the at least one hollowed-out cavity comprises at least one of a circular shape, an elliptical shape, a polygonal shape, an annular shape and an irregular shape.

5. The laser ignition device according to claim 2 or 3, wherein at least part of the heat-absorbing material forms a heat-absorbing thin film, and the heat-absorbing thin film covers part of an inner surface of the light-transmissive container.

6. The laser ignition device according to claim 1, further comprising an anti-reflective film, wherein the anti-reflective film covers at least one of an outer surface of the light-transmissive container and an inner surface of the light-transmissive container.

7. The laser ignition device according to claim 1, further comprising a thermally conductive electrical insulation substrate, wherein the thermally conductive electrical insulation substrate is fixed to an inner surface of the housing through solder; the plurality of lasers are disposed on a surface of a side of the thermally conductive electrical insulation substrate away from the housing and are electrically connected to an electrode layer located on a surface of the thermally conductive electrical insulation substrate; and
the electrode layer comprises a positive electrode and a negative electrode; the positive electrode and the negative electrode are configured to be led out of the housing through a flexible printed circuit board and electrically connected to a drive unit; or the positive electrode and the negative electrode are configured to be led out of the housing through electrode rods and electrically connected to a drive unit.

8. The laser ignition device according to claim 7, wherein a material of the housing comprises heat dissipation metal.

9. The laser ignition device according to claim 7, wherein a material of the thermally conductive electrical insulation substrate comprises at least one of aluminum nitride, copper diamond, beryllium oxide and aluminum oxide.

10. The laser ignition device according to claim 1, wherein a material of the light-transmissive container comprises at least one of glass, silicon carbide, ceramic, oxide and nitride.

11. The laser ignition device according to claim 1, wherein types of the plurality of lasers in the laser-emitting unit comprise at least one of an edge emitting laser, a vertical cavity surface emitting laser, a photonic crystal laser and a horizontal cavity surface emitting laser.

12. The laser ignition device according to claim 1, wherein a photodetector is disposed opposite each laser of the plurality of lasers, and an optical structure is disposed between the each laser and the photodetector; the optical structure is configured to guide part of light of the each laser to the photodetector.

13. The laser ignition device according to claim 12, wherein the optical structure comprises a light pipe, and the light pipe is disposed in the housing of the light-transmissive container.

14. A preparation method of a laser ignition device for preparing the laser ignition device according to any one of claims 1 to 13, comprising:
providing a metal heat sink;
fixing a plurality of lasers to a surface of the metal heat sink; and
providing a light-transmissive container and processing the metal heat sink into a housing surrounding the light-transmissive container, wherein the plurality of lasers are disposed between the housing and the light-transmissive container, and light emission directions of the plurality of lasers are towards the light-transmissive container; the light-transmissive container is configured to accommodate a to-be-atomized raw material and a heat-absorbing material, and the plurality of lasers are configured to heat and atomize the to-be-atomized raw material; the heat-absorbing material is used for absorbing heat to increase an atomization degree of the to-be-atomized raw material.
